(19) Europäisches Patentamt
European Patent Office
Office européen des brevets

(11) EP 1 808 687 A2

(12) EUROPEAN PATENT APPLICATION

(43) Date of publication:
18.07.2007 Bulletin 2007/29

(51) Int Cl.:
G01N 15/04 (2006.01)

(21) Application number: 07007744.1

(22) Date of filing: 24.07.2003

(84) Designated Contracting States:
DE FR GB IT
Designated Extension States:
AL LT LV MK

(30) Priority: 24.07.2002 US 202777

(62) Document number(s) of the earlier application(s) in accordance with Art. 76 EPC:
03016887.6 / 1 408 322

(71) Applicant: WYATT TECHNOLOGY CORPORATION
Goleta CA 93117 (US)

(72) Inventor: Wyatt, Philip
Santa Barbara, CA 93105 (US)

(74) Representative: Eisenführ, Speiser & Partner
Patentanwälte Rechtsanwälte
Zippelhaus 5
20457 Hamburg (DE)

Remarks:
This application was filed on 17 - 04 - 2007 as a divisional application to the application mentioned under INID code 62.

(54) Absolute measurement centrifuge

(57) A key problem associated with most types of separators based upon use of centrifugal forces is the difficulty such devices have with making absolute measurements of particle size and/or molar mass. By integrating means to produce and detect light scattered from samples undergoing centrifugal separation, particle sizes in the sub-micrometer range may be extracted from such measurements even in the presence of diffusion. The integration of light scattering detectors into an environment of high speed machinery is achieved by modifying the transparent surfaces of the sample holding region of the centrifuge. Such optical modifications allow the placement of stationary detector arrays able to collect light scattered by the samples during the brief collection times available. Three specific structures are addressed: A conventional disk centrifuge with a sample cavity integrated into the rotating structure; a disk centrifuge containing removable sample holding cuvettes, and an analytical ultracentrifuge. Modifications to the analytical ultracentrifuge permit the direct determination of molecular mass resulting, thereby, in the ability to measure molecular displacement volumes and all associated quantities directly.

FIGURE 2

EP 1 808 687 A2

## Description

### Related applications and patents

The following patents and applications relate to the methods of light scattering for the measurement of molecular and particle mass and size.

P. J. Wyatt, U.S. Pat. No. 6,411,383 B1 (25 June, 2002) "Method for measuring the 2nd virial coefficient."

S. Trainoff and P. J. Wyatt, Application presently being filed "Method for determining average solution properties of macromolecules by the injection method."

### Background

Of all the devices that may be used for measuring the sizes of particles in the nanometer range, the disk and ultra centrifuges are among those most capable of providing high-resolution separations. Despite such resolution capability, the operation of such centrifuges is generally fraught with considerable ambiguities. Most of these problems are associated with uncertainties in the derived sizes of particles since such sizes are based entirely upon the arrival times of the separated particles at the detector. By using a mixture of the unknown sample particles with particles whose sizes are precisely known, these arrival times may be calibrated to some extent. Unfortunately, despite such calibrations, small variations in temperature and rotor speed, in addition to so-called streaming phenomena, often render such calibrations questionable. Another major difficulty relates to the need to know precisely the density of the assumed homogeneous spherical particle structures and that of the fluid environment in which the separation is performed. Whenever a gradient is used, the explicit density variation should be known as well. Other problems associated with determining particle size by measuring times-of-arrival at the detector include deviations of Reynolds' number in excess of 0.5%, effects of sample dispersion due to Brownian motion resulting in the spreading out of the arrival times of identical particles, band broadening dependent on the speed of separation, establishing suitable gradients to prevent streaming, overloading sample concentration, range of particle sizes in the sample, problems with deconvolution analyses, *etc.* Virtually all these difficulties are associated with one basic shortcoming of these devices: centrifugal separation is not an absolute measurement method for most classes of particles. In other words, with the exception of a theoretical arrival time for homogeneous spheres at the detector, once a set of particles has arrived, their size cannot be measured directly. Of course, if the particles are not homogeneous spheres, *i.e.* of unknown structure, even the best of prior calibration procedures can result in great uncertainties in interpretation.

Centrifugal separation would appear ideally suited for the subsequent application of a multiangle light scattering, or MALS, analysis were it not for the inaccessibility of the samples. Thus, using cross flow field flow fractionation as described by Wyatt, for example, in his 1998 article "Submicrometer particle sizing by multiangle light scattering following fractionation," that appeared in J. Colloid and Interface Science volume 197, pages 9-20, multiangle light scattering analyses of the eluant samples following separation produces detailed and accurate size and distribution information. The concept has been applied also to the analyses of samples separated by other methods including size exclusion chromatography and capillary hydrodynamic fractionation, to name a few. A centrifugal device with an accessible eluting sample following separation was developed by J. Calvin Giddings and is referred to as sedimentation field flow fractionation, or SdFFF for short. This method, described, for example by Giddings in his 1993 paper in volume 260 of Science at pages 1456 *et seq.,* required an elaborate set of slip rings and capillaries. Other types of FFF separation techniques are also discussed in Giddings' paper. Combined with MALS, the analysis of eluting samples permitted the accurate characterization of each eluting fraction of particles independent of diffusion effects. Nevertheless, the SdFFF device had neither the resolution nor dynamic range of the more conventional centrifugal separation devices and was prone to leaks within a short time of installing new seals.

Results derived from the more conventional disk centrifuge and analytical centrifuge devices are based on the optical examination of small regions within the sample volume being subjected to centrifugal forces. Remote light sources, i. e. stationary relative to the spinning samples, are synchronized to the motion of the sample through the incident light beam to yield some measure of particle presence in the particular region being "interrogated." These may include absorption and forward scattering measurements as well as fluorescence for some devices. From such measurements, further attempts are usually made to derive a size distribution of the particle sample by interpreting the scattering and/or obscuration of the transmitted light beam at the detector in terms of Lorenz-Mie scattering theory, *i.e.* assuming the particles are spheres. The forward-scattered light intensity is assumed to arise because such spheres of a known radius, *a,* have entered the incident light beam. However, such "known" size was extracted from the time of arrival of the particles based on the relation

$$D \approx \frac{\sqrt{18\eta \ln(R/R_0)}}{\omega\left(\rho_p - \rho_f\right)^{\frac{1}{2}} t^{\frac{1}{2}}}, \tag{1}$$

where $D = 2a$ is the particle diameter, $\omega$ is the angular velocity of the rotor, $R_0$ is the radius at which the sample particles were injected at time $t = 0$, $R$ is the radius at which they are detected, $\eta$ is the fluid viscosity, and $\rho_P$ and $\rho_f$ are the particle and fluid specific gravities, respectively. Possible sources of error in the terms of Eq. (1) can be significant. Most importantly, Eq. (1) only applies strictly for the case of homogeneous spherical structures.

Perhaps the greatest source of error in deriving particle size from Eq. (1) occurs when the particle density is close to that of the medium which is the case, for example, for proteins and a variety of particles produced by emulsion polymerization. When $\rho_p$ and $\rho_f$ are very close, slight errors in $\rho_P$ can result in significant errors in the derived particle diameter, D. In addition, of course, Eq. (1) applies only to spherical particles. For non-spherical particles, the hydrodynamic radius, $r_h$, derived is just that of an equivalent sphere. It is an objective of this invention to provide a means by which the hydrodynamic radius of a particle passing through the detection beam may be determined far more accurately and without reference to a known particle standard, often used for centrifuge calibration. In addition to a measurement of the hydrodynamic radius, a particularly useful objective of this invention is the measurement of the so-called mean square radius. Knowledge of both of these radii often permits the derivation of the particle structure as well.

It is a further objective of this invention to provide an absolute measure of the radius of a spherical particle in the range of about 10 through 1000nm without calibration. An additional objective of this invention is to permit the accurate derivation of the particle size distributions of particles separated by centrifugal means even in the presence of significant diffusion caused by Brownian motion. Another objective of this invention is to circumvent, whenever possible, distortions in derived size distributions caused by other effects that tend to broaden the separated particle bands that appear at the detector such as systematic variations in rotor speed, changes in fluid temperature and viscosity, etc. Still another objective of this invention is the ability to measure sizes and size distributions for a broad range of inhomogeneous particles whose individual density variations may not be known *a priori.* Because some implementations of the disk and ultracentrifuges purport to be able to measure the concentration of very small particles directly, another objective of this invention is to be able to measure the molar mass of certain classes of molecules separated by centrifugal means. The success of the present invention to achieve these objectives depends critically upon the ability to integrate a MALS detection system into a centrifugal separation device and to use the existing features of centrifugal devices to permit more accurate analyses of the measured samples.

**Brief descriptions of the drawings**

Figure 1 shows the general structure of a disk centrifuge with transparent walls.
Figure 2 shows an end-on view of a disk centrifuge indicating the liquid meniscus and the radially increasing sample band.
Figure 3 shows a modified disk centrifuge with one wall containing an optical berm.
Figure 4 shows a detector configuration based on the berm structure of Fig. 3 permitting the measurement of light scattered by the sample over a range of angles.
Figure 5 corresponds to an alternate form of a disk centrifuge wherein the samples are contained in discrete sample cells or cuvettes.
Figure 6 is a schematic layout of the optical system for the Beckman Optima XL-A Analytical Centrifuge.
Figure 7 shows a preferred embodiment of a sample cuvette incorporating a cylindrical lens for use in an ultracentrifuge incorporating discrete sample cuvettes.
Figure 8 shows a preferred embodiment of the detection system for the Beckman Analytical Centrifuge.
Figure 9 shows the mounting of laser and UV/visible light sources in juxtaposition to be used to provide sequential illumination of the samples.

**Summary of the invention**

The present invention permits the sizing of particles separated by sedimentation methods, such as a disk or analytical centrifuge, without requiring the use of standards for calibration. Because of this capability, problems with the separation mechanisms themselves are readily detected. Most centrifugation separation and subsequent sizing methods are based upon measuring the intensity of a highly collimated beam of light that has passed through a sample undergoing sedimentation separation. The transmitted light beam provides a measure of the sample absorption as well as forward scattering. By correcting for the contributions of forward scattering, assuming that the particles are homogeneous spheres and using Lorenz-Mie scattering theory, and applying a size/time relation such as shown in Eq. (1), the particles' effective size is derived. Most devices that use such beam geometries, such as Koehler, et al. in their U.S. patent number 4,311,039 emphasize further the need to collimate the light source and detector so that it correlate well with the small fraction of particles being illuminated.

The present invention modifies the detection of light passing through the sample by adding optical elements, masks, and an array of detectors thus permitting measurement of the light scattered by the sample over a range of angles. This multiangle light scattering detection device permits the determination of the scattering particles' mean square radius that, for a wide range of particle shapes, may be expressed as an effective particle size. Multiangle light scattering is often referred to by the acronym MALS. From such measurement of each fraction passing through the incident light beam, a size distribution may be derived that is absolute and independent of the time of arrival of the sample at the detector. For many types of particles in the submicrometer size range, these measurements are virtually independent of both particle density and refractive index.

The inventive concepts disclosed further have immediate application to other devices utilizing centrifugal forces for separation. Whereas many practitioners of such separation processes have been reliant upon the use of calibration standards as well as having to make the often overwhelmingly precise measurements of the physical parameters of the samples and fluids involved, with the present invention the entire measurement process and subsequent interpretation will be simplified significantly.

**Detailed description of the invention**

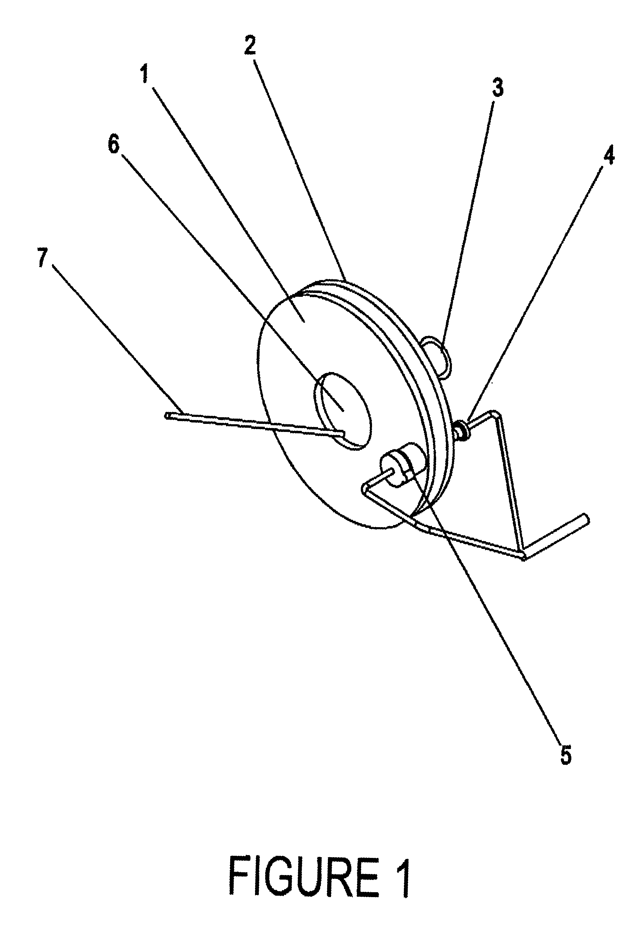

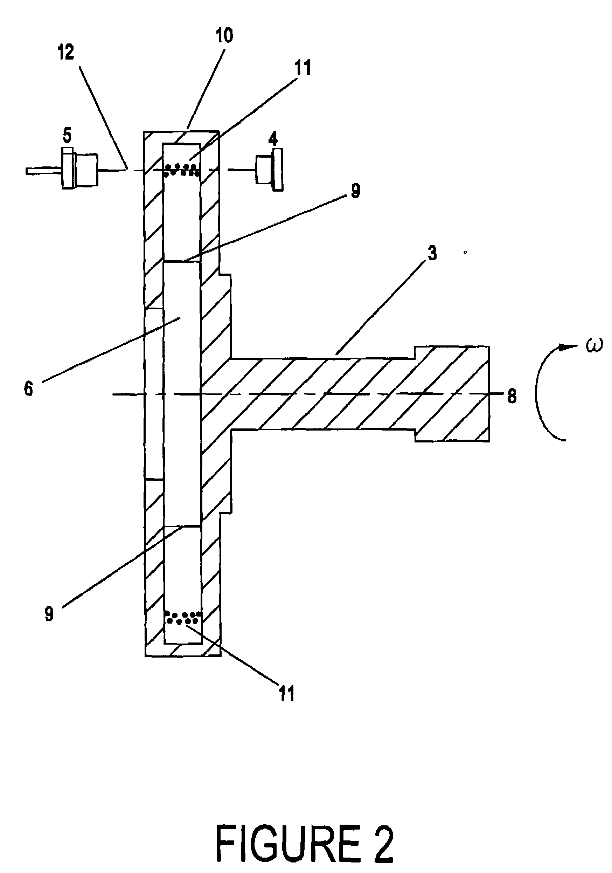

The typical rotor and sample containing elements of a disk centrifuge are shown in Fig. 1. These include the transparent side plates 1 and 2 forming the sides of a fluid-containing sample chamber therebetween and a central rotor hub 3 attached to one of the plates. A fine collimated light source is shown at 4 and detector cell at 5. Samples are introduced generally through the center opening 6 of 1 via channel 7, Such and similar structures have been disclosed, for example, in the U. S. Patents 4,311,039 by Koehler et al. and 5,786,898 by Fitzpatrick. Figure 2 shows an end-on view of the sample chamber during operation. The particle sample is inserted through the opening 6 concentric with the axis of rotation 8 through the rotor 3 so that it begins its separation once in contact with the fluid meniscus 9. Because of centrifugal forces, the sample migrates outwardly and eventually reaches the chamber outermost boundary 10 where it remains until the chamber is cleaned. As each fraction of the sample reaches the detection region 11, it passes through the incident light beam 12 from source 4 that is monitored at detector 5. The light beam is generally well collimated and often monochromatic, for example, when the source a laser. On the other hand, it may be generated by a monochrometer providing a beam of controlled variable wavelength. Such monochrometers are often provided as part of the apparatus of analytical centrifuges. For certain classes of particles, a well-collimated light beam from a UV source is preferable.

The use of such centrifuges for the determination of particle size and particle size distributions based on the type of attenuated transmitted light measurements described above, is generally referred to as the "photosedimentation method". Because the associated separation theory refers specifically to particles of spherical shape, the versatility of the method becomes extremely limited and eventually requires for most measurements the introduction of "calibrated" standards. The departures of both theory and interpretation of arbitrarily shaped particles are rarely discussed in the literature or the patents based upon such measurements.

Although Eq. (1) is the form generally presented to show the relation between particle diameter $D$ and arrival time $t$, it is instructive to examine its basis. As the chamber rotates at an angular velocity $\omega$, a particle of mass m is forced outwardly by the centrifugal force $mR\omega^2$, where R is the distance from the axis of rotation 3. However, if the particle density is $\rho_p$, the fluid density is $\rho_f$, and the particle occupies a volume V, then the centrifugal force becomes $(\rho_p - \rho_f)VR\omega^2$. For the case of a spherical particle of radius $a$, the centrifugal force is simply $4\pi a^3(\rho_p - \rho_f)R\omega^2/3$. Opposing the radial motion is the so-called Stokes' force which, for a sphere, is just $6\pi\eta a\ dR/dt$ where $a$ is the radius of the sphere and $\eta$ the viscosity of the fluid Note that this latter formula applies only to a sphere and, therefore, the only result derivable in closed form. The net radial force on a spherical particle, therefore, is just the difference of the two forces, i. e.

$$m\ddot{R} = 4\pi\left(\rho_p - \rho_f\right)R\omega^2 a^3/3 - 6\pi\eta a\dot{R} \qquad (2)$$

or, since m = $4\pi a^3(\rho_p - \rho_f)/3$,

$$\ddot{R} = R\omega^2 - 9\eta\dot{R}/\left[2a^2(\rho_p - \rho_f)\right]. \qquad (3)$$

Thus

$$\ddot{R} + b\dot{R} - \omega^2 R = 0. \qquad (4)$$

Equation (4) is readily solved in the general form

$$R = C_1 \exp(\alpha_1 t) + C_2 \exp(\alpha_2 t), \qquad (5)$$

where

$$\alpha_{1,2} = \frac{-b \pm \sqrt{b^2 + 4\omega^2}}{2} = -b/2 \pm \sqrt{(b/2)^2 + \omega^2},$$

and $b = 9\eta/[2a^2(\rho_p - \rho_f)]$. At $t = 0$, $R = R_0$, the radius at which the sample is injected.

Thus $C_1 + C_2 = R_0$. Also $\dot{R} = 0$ at $t = 0$, so $C_1\alpha_1 + C_2\alpha_2 = 0$. Combining these initial conditions to determine the coefficients $C_1$ and $C_2$ results in the final expression for the position, $R(t)$, of the spherical particle as a function of time:

$$R(t) = R_0 \exp(-bt/2)\left[\cosh\frac{b}{2}\sqrt{1 + (2\omega/b)^2}\,t + \sinh\frac{b}{2}\sqrt{1 + (2\omega/b)^2}\,t\right]. \qquad (6)$$

For typical separations for which $\omega$ is of the order of $2\pi 10^4$, where the fluid is water, the sphere is of diameter 100nm, and the density difference between the particle and fluid is of the order of $5 \times 10^{-2}$, the quantity $2\omega/b \ll 1$. Equation (6) then becomes simply

$$R = R_0 \exp(\omega^2 t/b). \qquad (7)$$

Solving Eq. (7) for D yields Eq.(1) immediately. Note that all of these results apply to spheres only and are affected considerably by even slight differences between the actual particle and fluid densities and those measured. For the case of inhomogeneous particles, even of spherically symmetric shape, the average particle densities well may vary with particle size making the interpretation of Eq. (1) even more uncertain.

The general chamber structure of the disk centrifuge per, for example, the device previously referenced by Koehler, *et al.* will result in a cylinder of fluid confined between two plates. Particles confined in such rotating fluids will be subject to both centrifugal and Coriolis forces. The Coriolis force, of magnitude $2\omega\dot{R}$ causes a motion in the direction of rotation. Since the ratio of the Coriolis force to the centrifugal force, $\omega^2 R$, is $2\omega/b$, we see that it is generally negligible.

Hoffman discloses an application of a disk centrifuge manufactured by Horiba, Ltd. of Kyoto, Japan, in his U. S. Patent number 4,871,248. The Horiba disk centrifuge, *e. g.* their CAPA 500, makes use of cuvettes mounted within the disk structure that rotates in a horizontal plane. These small cuvettes restrict any motion in the direction of rotation and eliminate thereby any Coriolis effects, no matter how great the angular velocity of the system. Thus samples are placed into the cuvettes as uniform dispersions that separate into specific populations during the spinning of the disk.

Light scattering is perhaps the best-known means for measuring the size of particles. Measurement of the scattered light intensity, as a function of scattering angle can be used to deduce such size for many diverse types of particles. For the case of a spherical particle, measurement of such multiangle light scattering patterns may be used to derive both sphere diameter and refractive index. Phillips, Wyatt and Berkman have demonstrated this, for example, in their 1970 paper appearing in the Journal of Colloid and Interface Science, volume 34, pages 159 to 162. The structure of particles exhibiting spherically symmetry may also be deduced in some cases by measurement of their light scattering properties. Examples of the application of MALS measurements to the determination of such structures may be found in the following papers, for example:

"Cell Wall Thickness, Size Distribution, Refractive Index Ratio, and Dry Weight Content of Living Bacteria (Staphylococcus aureus)," Nature 226, 277 (1970).
"Dielectric Structure of Spores from Differential Light Scattering," Spores V, American Society for Microbiology, (1971).
"Structure of Single Bacteria from Light Scattering," with D.T. Phillips, J. Theor. Biol. 37, 493 (1972).
"Some Chemical, Physical and Optical Properties of Fly Ash Particles," Applied Optics 14, 975 (1980).

For very small particles whose radii are less than about 10 nm, their size cannot be determined by MALS for visible incident light. This limitation is due entirely to lack of resolution at the wavelengths used for the measurements, Thus MALS cannot be used to derive the size of proteins, for example, whose size is typically of the order of a few nanometers. However, since various centrifuges, such as the analytical ultracentrifuge of Beckman Instruments, are equipped with advanced absorption optical systems, they are capable in principle of measuring the absolute concentration at any point in the sample. With the MALS capability of the present invention, it is possible to derive protein molar masses directly by combining the light scattering data with the concentration results. Historically, it must be mentioned that measurements with the ultracentrifuge have been combined with other measurements such as light scattering, quasielastic light scattering, and viscometry in order to understand better the traditional ultracentrifuge results when the particles or proteins of interest are not spheres.

When the refractive index of particles subject to MALS measurements is close to the refractive index of the suspending fluid, there are several simplifications in the theoretical interpretation of the MALS measurements that permit the determination of the so-called rms radius of the scattering particles. For many simple structures such as spheres, rods, disks, ellipsoids, etc., the rms radius may be related directly to more characteristic size parameters such as radius or length, With some a priori knowledge of the particles' shape, the present invention permits for many classes of particles the determination of their size even though they are not spheres. In addition, for a reasonably wide range of refractive indices and corresponding densities, the sizes of even spherical particles may be determined accurately from their measurement in a centrifugal device incorporating the key features of the present invention. As clearly evident from Eq. (1), slight errors in the determination of particle density can result in large sizing errors using devices based on centrifugal separations. The density of simple polystyrene spheres relative to water is only of the order of $5 \times 10^{-2}$ and obviously any errors in this value will have a major effect on the determination of the corresponding particle size based on Eq. (1). The present invention eliminates this dependency to a great extent.

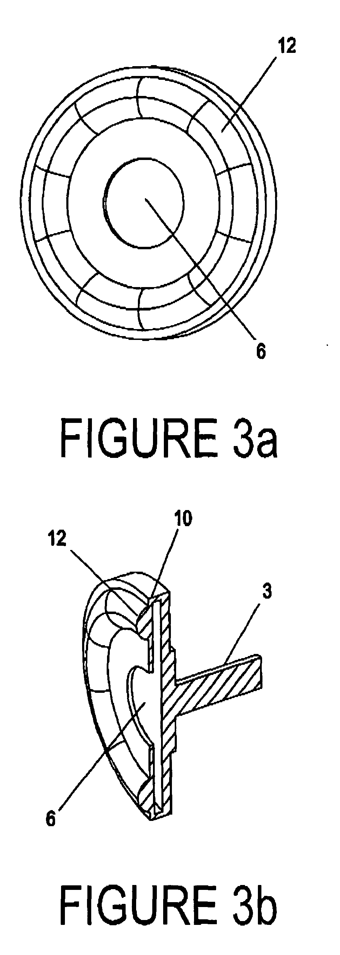

In order to make MALS measurements from a sample undergoing centrifugal separation according to the methods taught by the present invention, special optics and detector capabilities must be incorporated into the centrifugal devices. Figure 3a shows a preferred embodiment of an element of the invention. A transparent berm 12 has been integrated into the outer transparent plate of a disk centrifuge. A cross section of the plate with the integrated cylindrical berm is shown in Fig. 3b. In its preferred embodiment, the radius of curvature of the berm will be centered at the illuminated sample.

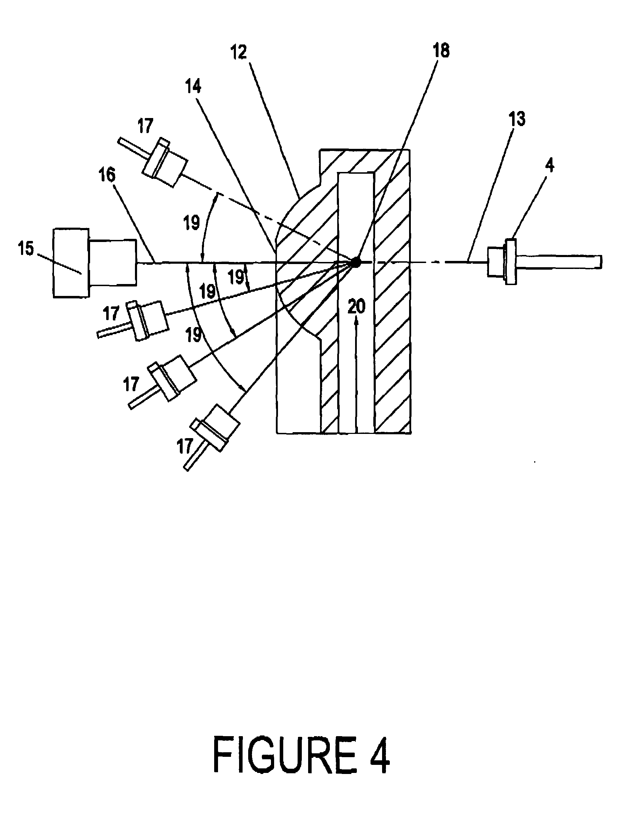

Figure 4 shows a finely collimated light beam 13 from light beam source 4 passing through the berm structure 12 and exiting at 14 before entering a transmitted light detector 15. In the preferred configuration of the optical berm, the beam 16 exits normally through a flattened anti-reflection coated surface 14. Also shown is a set of highly collimated detectors 17 each receiving light scattered by the sample region 18 into unique angular directions 19 with respect to the emerging beam 16. Note that the light scattered from the sample region 18 leaves the optical berm normal to its surface. The detectors 17 are collimated so as to accept light scattered from the sample region 18 within a small solid angle. Because the separations of particles generally span a small range of centrifugal radial distances 20, it is essential that the detector collimation provide a high degree of sample/solute resolution with respect to the radial direction. This is achieved by collimation that provides for a highly localized coincident field of view at each distinct detector. Adding optical lenses in front of the detectors would further restrict the depth of field and, thereby, the contributing scattering volume detected. Although the berm may be eliminated completely resulting in the emergence of scattered light through the flat outer plate surface, the specific masking and detector orientation required to detect light scattered from the same highly restricted scattering region would add considerable complexity to the apparatus. Internal reflections at all interfaces would be increased and the associated need to provide suitable masking to prevent the passage of stray light into the detectors could add significant additional structural elements. In the preferred embodiment of this invention, the light would be from a laser source and would be plane polarized perpendicular to the plane containing the detectors 17 shown. Although such co-planar detectors are sufficient to provide the characterizing data that would form the basis for subsequent analysis of the molecules/particles being measured, for some classes of measurements or because of geometrical limitations, detectors outside of such a preferred plane may be employed. Such detectors would be classified by both a scattering angle and an azimuthal angle with respect to a defined plane.

The structure shown in Fig. 4 for the detection of scattered light from a disk centrifuge sample is quite different from the conventional transmitted beam detection shown in Fig. 1. Most importantly, the particles in the illuminated region 18 are detected by the light they scatter rather than the more conventional absorption means achieved by monitoring the transmitted beam. By integrating into the disk structure a transparent berm whose cross section provides an optical surface normal to the scattered light, it becomes possible to measure the scattered light intensity over a greater range of angles than would otherwise be the case were the surface planar. Typically, this range could be between 10 degrees and 80 degrees. Adding anti-reflection coating over the surfaces through which the scattered light passes will enhance the transmission characteristics of the optical berm structure further. The forward transmitted beam 16 is measured at detector 15 which may serve also as a light trap, preventing, thereby, the presence of stray light that might be scattered by adjacent structures into the MALS detectors 17. The trap incorporated therein could consist of a Rayleigh horn or even a mirror or prism structure that would remove the incident beam and send it in a region where any light scattered from such deviated beam would not be detectable by any of the collimated detectors 17. The trap could be comprised also of an optically dense and non-reflecting medium such as antireflection coated black glass. However, for measurements of the intensity of the transmitted beam 16, which for many of the implementations of the photosedimentation method is required to calculate the associated particle/molecular concentration, a combination of a beam intensity detector and a beam trap will be required.

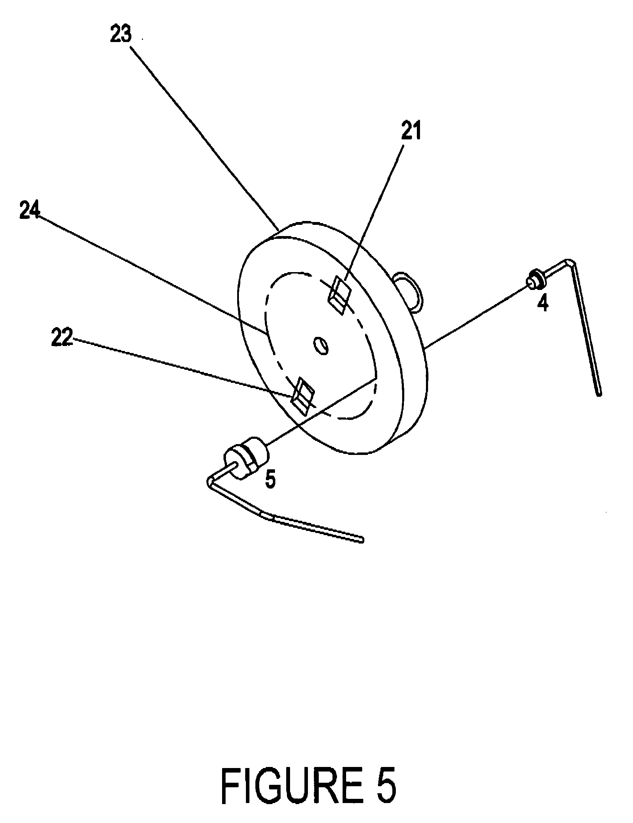

Figure 5 shows the basic elements of the Horiba disk centrifuge discussed earlier. Two cuvettes, containing the sample and reference fluids respectively, are placed at 21 and 22 within the horizontal disk 23. The light source and detector is similar to that used with the Koehler *et al.* device discussed earlier though since the cells or cuvettes, and associated sample, occupy only a small part of the circumference 24 traced out by the light source-produced beam as the disk rotates. The light source 4 and/or detector 5 may be pulsed or modulated so that they are turned on only during the period the sample or reference cuvettes are in the beam. High resolution of a sedimenting sample requires that the light beam diameter be as small as practical. For the Horiba device, the beam diameter is an order of magnitude greater at 2 to 3 mm than that of currently available laser sources preferred for the present invention.

The analytical ultracentrifuge, of the type sold by Beckman Instruments, Inc., represents a device quite distinct from the disk centrifuges discussed earlier. Because they can achieve far greater speeds, up to 60,000 revolutions per minute, they are able to separate far smaller particles. Indeed, one of the main applications of such systems is for the study of proteins. Such molecules are distinguished by their small size, rarely exceeding a few nanometers, and their associated greater diffusion coefficients. The determination of molecular weight, shapes, sizes, distributions and purity may, in principle, be derived directly from careful measurements of various features of a sedimenting sample. Such measurements include the need to observe and detect sharp boundary regions in the separating samples. The analytical ultracentrifuge relations used to derive molar mass, for example, are quite different from Eq. (1) used to derive the diameter of the separated particles. Rather than make assumptions concerning the molecule's shape and assuming that Stokes' law may describe the viscous drag force, the frictional force is assumed to be of the form $F_f = -fu = -f\,dR/dt = -f\dot{R}$, where f is the so-called frictional coefficient which depends on the particle's size and shape. The particle mass m is expressed in terms of its associated molar mass $M$ by dividing by Avogadro's number $N_a$, *i. e. $m = M/N_a$*. Thus Eq. (2) is generalized to the form

$$\frac{M}{N_a}\omega^2 R - \frac{M}{N_a}\bar{v}\rho_f\omega^2 R - f\dot{R} \approx 0,$$

(8)

where a steady state has been assumed to exist, *i.e.* $\ddot{R} \approx 0$. The second term in Eq. (8) corresponds to the contribution of buoyancy, where $\rho_f$ is the density of the solvent and is the volume in g/mL displaced by each gram of the molecule. Combining the terms of Eq. (8) results in

$$s = \frac{\dot{R}}{\omega^2 R},$$

(9)

where $s = \dfrac{M}{N_a}\left[1 - \bar{v}\rho_f\right]$ is the sedimentation coefficient. For relatively sharp and symmetrical sedimenting boundaries, the sedimentation coefficient is obtained by integrating $\dfrac{\dot{R}}{\omega^2 R}$ to yield

$$\ln(R/R_m) = s\omega^2 t, \qquad (10)$$

where R is the boundary midpoint and $R_m$ is the meniscus position. Note the similarity of Eq. (10) and the corresponding result for the disk centrifuge of Eq. (7). A plot of $\ln(R)$ versus $t$ yields a straight line of slope $\omega^2 s$ from which $s$ may be calculated. Next, measurement of the rate of boundary spreading can be used to calculate the diffusion coefficient D that will depend on the effective size of the diffusing molecules through the corresponding frictional coefficient $f$. Thus

$$D = \frac{\mathfrak{R}T}{N_a f}. \qquad (11)$$

The absolute temperature is $T$ and $\mathfrak{R}$ is the gas constant. Taking the ratio of the sedimentation to the diffusion coefficient using Eq. (9) and (11) gives the molar mass

$$M = \frac{s^0 \mathfrak{R}T}{D^0(1 - \bar{v}\rho)}. \qquad (12)$$

The superscripts indicate that the calculated diffusion and sedimentation coefficients have been extrapolated to zero solute concentration. Each is generally calculated from measurements made using solutes at different concentrations.

The derivation of molar mass results based on Eq. (12) involves both a great amount of time and extensive calculations. The determination of the partial specific volume $\bar{v}$ itself is generally no trivial matter. Indeed, the determination of molar mass, though absolute, is most difficult to measure by analytical ultracentrifuge. The preferred method by which molar mass is determined using the analytical ultracentrifuge is by means of the technique of sedimentation equilibrium. A small volume of an initially uniform solution is centrifuged at lower speeds than generally required to obtain the molar mass by means of the sedimentation velocity method of Eq. (12). This results in a concentration gradient building up from the bottom of the cuvette. The molecular diffusion increases with increasing concentration so that there are two counter flows at each concentration: a radial flow caused by the centrifugal force and an opposite flow due to diffusion. Eventually an equilibrium concentration distribution is achieved where the concentration of the molecular species varies exponentially with $R^2$. For a monodisperse non-associating molecular solute, the molar mass may be shown to be

$$M = \frac{2\mathfrak{R}T}{(1 - \bar{v}\rho)\omega^2} \frac{d(\ln c)}{d(R^2)}. \qquad (13)$$

Thus a plot of ln c versus $R^2$ yields a slope directly proportional to the molar mass, $M$. Alternatively, by fitting the data of c versus $R^2$ to an exponential using a least squares' fit, one should be able to derive an estimate of $M(1 - \bar{v}\rho)$ directly.

Despite the great difficulties associated with finding molar masses directly using the analytical ultracentrifuge, the power of the instrument to separate such small molecules while at the same time being able study a wide range of other phenomena such as heterogeneity, association reactions, and a variety of thermodynamic properties make the analytical centrifuge a most useful analytical tool. Because the Beckman device measures concentration directly, were the instrument combined with the elements of the present invention, its utility would be extended significantly. Thus molar masses could be calculated directly by combining concentration measurements with an absolute measurement of light scattered by the samples being studied. Once molar masses were so easily obtained, more accurate values of both sedimentation and diffusion constants could be derived almost effortlessly. The means by which the preferred embodiment of the present invention may be applied to the analytical ultracentrifuge will now be discussed.

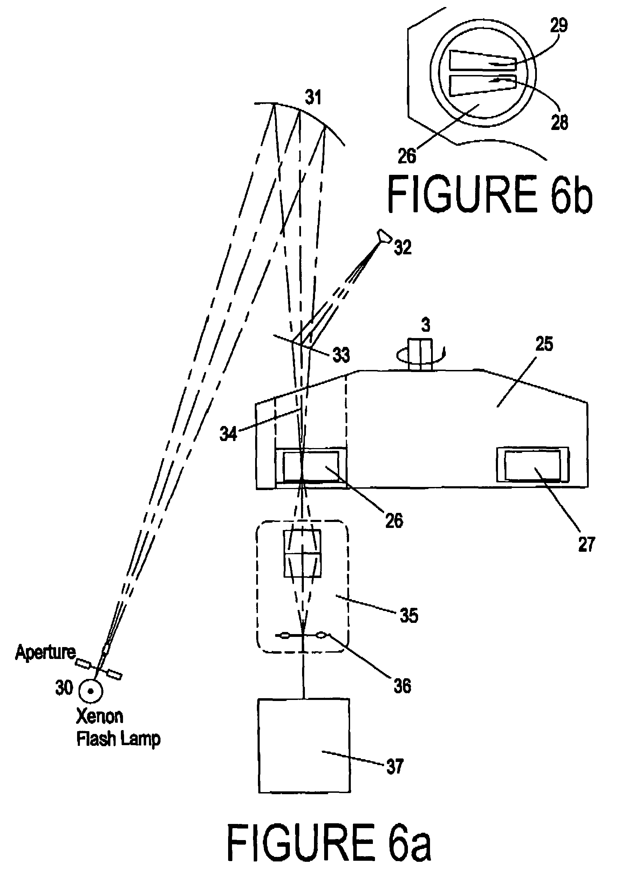

Figure 6a presents a schematic of the optical system of the Beckman analytical ultracentrifuge. The sample holding rotor **25** rotates about shaft **3** within an evacuated chamber. Similar to the Horiba structure of Fig. 5, the rotor contains sample and reference cuvettes. However, two pairs are included at diametrically opposite locations **26** and **27**. Figure 6b shows a top view of one of these locations, for example **26,** containing sample **28** and reference **29** cuvettes. By this means, two distinct samples may be processed during each experiment. Note that each cuvette is constructed with a side boundary lying along a radius at a slight angle to the other side that lies along the principal diameter of the rotor. This structure helps reduce internal sample streaming during separation. A Xenon flash lamp source **30** is shown together with a steering diffraction grating **31** and incident light monitor **32** that receives a small signal proportional to the incident intensity by means of a beam splitter **33.** The focused beam **34** passes sequentially through the sample and reference cells when cell-containing regions **26** or **27** are in the beam. In general, the incident light source is flashed so that the beam is on only during its passage through the sample or reference cells. The diffraction grating permits also the selection of the wavelength of the incident beam over the range of possibilities associated with the light source; in this case, a Xenon lamp. Generally wavelengths in the near ultraviolet are selected as a great many studies with such apparatus involve proteinaceous materials that absorb strongly in the UV. An optical imaging system **35** collects light transmitted through the sample within **26** or **27** from a small radial region within the sedimenting sample. The image of the mask **36** at the illuminated sample defines this narrow field of view. A photodetector such as a photomultiplier tube **37** detects this transmitted light, though other detection systems may be employed.

The structure comprised of the beam **34,** imaging system **35,** and photodetector **37** are controlled to move in the radial direction as a unit permitting, thereby, the sample to be measured at different radial distances. For the disk centrifuges, on the other hand, the beam/detector pair is set at a single radial distance throughout the entire measurement.

Depending upon the types of particles/molecules to be separated, the radial scans are repeated many times to yield a sedimentation profile as a function of time. In the preferred embodiment of this invention, when elastically scattered light measurements are implemented, the preferable light sources will be lasers. The optical systems can accommodate both UV flashed sources as well as lasers so that both concentration and so-called static light scattering measurements may be made almost simultaneously.

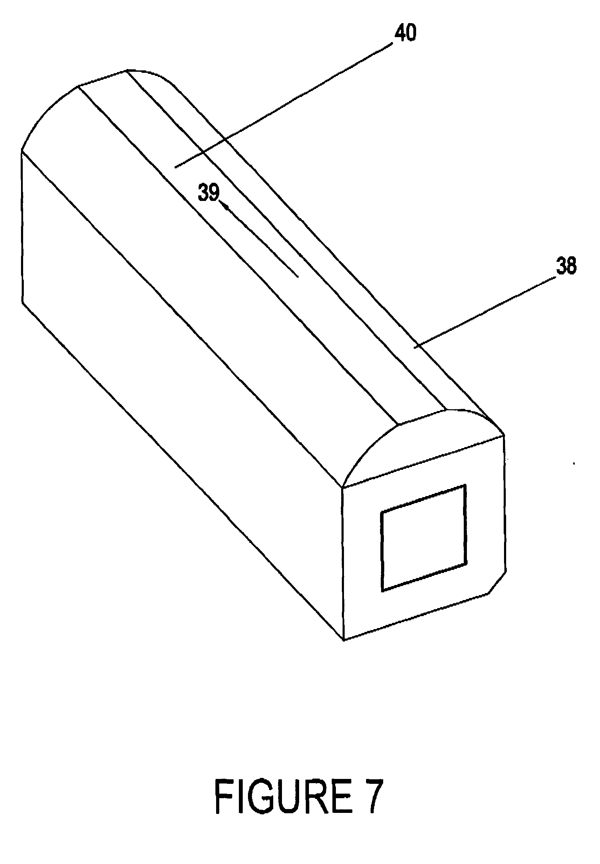

Unlike the disk centrifuge of Figs. 1 through 4, the analytical ultracentrifuge and the cuvette based disk centrifuge cannot benefit from the circular berm lens structure disclosed earlier. The individual cuvettes *per se* must incorporate the required cylindrical lens structure. Figure 7 presents a section of a cuvette that could be used in the present invention. Instead of having flat sides through which the light beam will pass, the flat surface through which the beam exits has been modified to provide a cylindrical structure **38** whose radius of curvature, in the preferred embodiment, is centered at the illuminated sample. For the ultracentrifuge, the beam also may be scanned radially along the length of the cuvette in the direction of increasing radius **39;** while for the disk centrifuge incorporating such cuvettes, the beam will be restricted to a fixed position. This cylindrical surface of the preferred embodiment may have a flattened apex 40 corresponding to the similar structure for the berm. The entire region may be antireflection coated, as well.

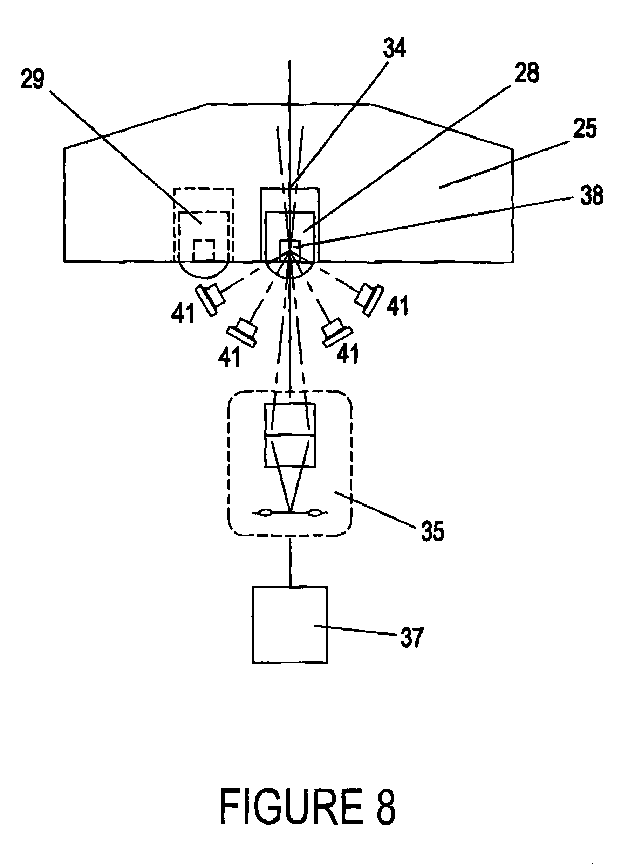

Figure 8 shows an instantaneous cross sectional view of the preferred embodiment for an analytical ultracentrifuge. Also shown are the imaging system **35** and the photomultiplier detector **37** of the conventional structure of Fig. 6a. In the region between this imaging system **35** and the rotor housing **25** are a set of collimated scattered light detectors **41** similar to the detectors 17 of Fig. 4. These detectors, as well as those shown in Fig.4, generally lie in a plane and intercept scattered light from a small illuminated volume **38** within the cuvette/cell **28.** They move with the other elements of the imaging system and collect scattered light throughout the radial scanning transverse to the plane of the figure. Thus the sample particle mass and size distribution profiles throughout the scanned cuvettes may be determined from the scattering measurements and recorded by the inventive system described. The light beam **34** is therefore always perpendicular to the imaging system **35** and the photomultiplier tube **37** to which are attached the scattered light detectors **41.** Thus all detection, light sources, and optical elements are on a fixed platform relative to the rotor 25. The platform may move radially, permitting, thereby, the radial scanning capability of the analytical ultra centrifuge. The ability to make radial scans during operation of conventional disc centrifuges is a feature not seen with such devices, but is relatively easy to implement. When the reference cuvette **29** arrives at the position previously occupied by the sample cuvette **28,** light scattered by its solution will be collected in a similar manner.

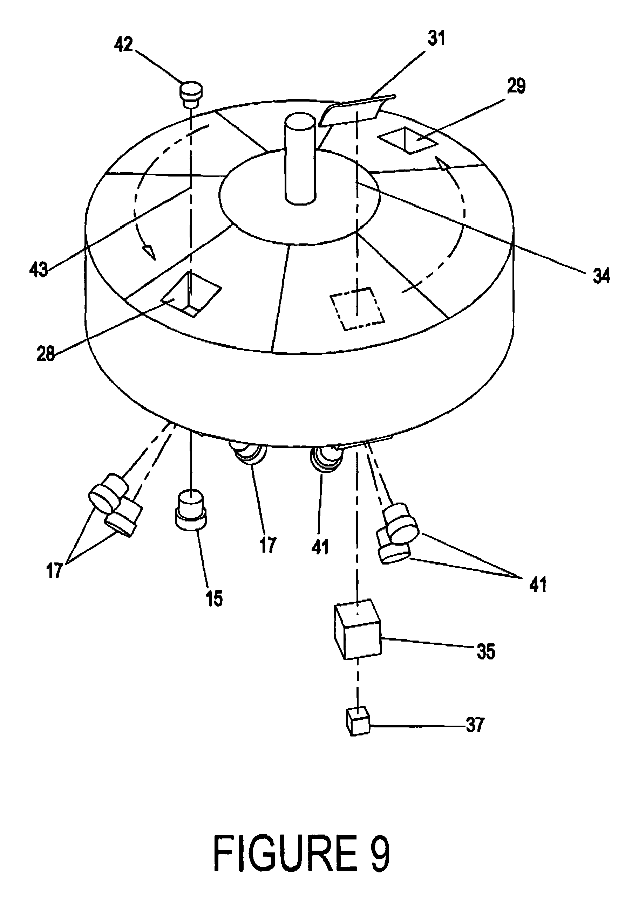

The light source producing the beam incident upon the sample and reference cuvettes can originate from a laser source or, alternatively, from a variable UV/visible light source such as commonly used in the analytical ultracentrifuge. On the other hand, both variable and laser sources may be activated sequentially or simultaneously. In Fig. 9 a laser source **42** used to produce a light beam to interrogate the sample is shown mounted in juxtaposition to the steering diffraction grating **31.** Both lie at the same radial distance, but displaced in rotation angle. The UV source beam **34** from the Xenon flash lamp **30** of Fig 8 will strike the cuvette **28** after the incident the laser beam **43** has passed through it as the cuvette rotates counterclockwise through the same radial position with respect to the cuvette-contained separating sample **28.** The corresponding transmitted UV/visible light beam **34** intensity, used to calculate the sample absorption, and the light scattered from laser beam **43** into detectors 17, are combined to calculate size and mass. The signals UV and laser beam interactions with the sample are collected sequentially at the same radial position of the sample. Note that the UV/ visible light source itself has an associated set of scattered light detectors **41** to detect scattered light from the sample. The UV/ visible light source may be replaced equivalently by any other light source or sources and used, for example, with a photodiode array detector.

Alternatively, the laser beam may be arranged to be collinear with the UV/ visible light source, or to replace it if the determination of the molar mass using concentration detection means is not required. A multiwavelength laser or light source may be selected as well, with various filters chosen to select the transmitted beam wavelength. Still other filters may be selected and attached to the scattered light detectors to eliminate detection of specific scattered wavelengths. There are many other means for providing such beams, as would be obvious to those skilled in the art of optical design

The dual source geometry discussed above for the case of the analytical ultracentrifuge, whereby the sample is illuminated sequentially by the two different light sources as the sample containing region rotates past them, may be applied as well to the disk centrifuge geometries discussed earlier. Thus dual sequential illumination can be used for the structures of Figs. 2 and/or 5. Indeed, multiple illumination sources may always be used for any of the centrifugal separation devices. Such multiple sources are not restricted to two.

If the laser and UV/ visible light sources were oriented so that they formed a single incident beam, then the scattered light detectors **17** would be fitted preferably with filters to remove UV/ visible light scattered by the solutions. Such filters would be preferably interference filters permitting only elastically scattered light at the laser wavelength to be detected. If inelastically scattered laser light is to be detected, such as caused by fluorescence, the corresponding detector filters would be selected accordingly- If any of the light sources employed is polarized, polarization sensitive analyzers may be attached to selected scattered light detectors to permit quantitative measurement of depolarization scattering effects.

It is clear from the discussions above that the key elements of this invention apply equally to various types of instrumentation using photometric means to monitor sedimentation phenomena induced by an applied centrifugal force. The purpose of the invention is to permit the measurement of scattered light from regions of the sample being separated by such means. From such measurements made over a range of scattering angles, it becomes possible to derive particle size directly, irrespective of diffusion phenomena. For the case of solvated molecules undergoing separation by centrifugal means, the weight average molar mass may be derived directly if the concentration of the molecules be known in addition to the differential refractive index increment, *dn/dc.* Details of such quantities may be found in the co-pending patents by Wyatt and Trainoff referenced at the beginning of this specification. Most centrifugal separation devices, and certainly the analytical ultracentrifuge, use a light beam whose absorption by the solution may be used directly to calculate the concentration of the molecules present. Thus for the case of solvated molecules, a UV/ visible light source is often sufficient as it exists to produce absorption data sufficient to determine, from the sample's extinction coefficient, the molecular concentration. For larger particles, on the other hand, such absorption techniques rarely may be used to calculate the particle concentration because of the role played by the particle scattering. In addition, the angular variation of such particle scattering is generally sufficient to calculate the effective particle size. Since the forward transmitted beam that passes directly through the sample is useful to determine the molecular concentration and, perhaps for some particles, the beam transmittance, the preferred embodiment of the invention would continue the use of such measurements.

Another key element of the invention relates to the modifications required of the exit surfaces of the sample-containing regions, As the beam leaves the sample, it should exit preferably normal to the transparent region in which the sample is restricted. Thus the normal surface through which the undeviated incident beam passes remains the same as that currently employed in such centrifugal separation devices. A major modification of the surface region is required so that the light scattered from the sample be measured also. As has been mentioned previously, the invention is intended to permit measurement of light scattered over a range of scattering angles from a small volume within the illuminated sample. Thus scattered light leaves the sample-containing surface normal thereto in its passage to a set of detectors placed preferably at equidistant radial positions from the small scattering volume. The collimation of these detectors defines the field of view, *i.e*. the transverse dimension of the scattering volume. The optical surface itself, generally forming a cylindrical lens whose apex has been flattened as described previously, would have its radius of curvature centered at the illuminated sample volume.

As will be evident to those skilled in the arts of light scattering, there are many obvious variations of the modified centrifugal separators I have invented and described that do not depart from the fundamental elements that I have listed for their practice; all such variations are but obvious implementations of my invention described hereinbefore and are included by reference to my claims, which follow.

**embodiments**

1. An improved disk centrifuge capable of measuring scattered light at a plurality of angles from a sample undergoing separation therein comprising

a) a cylindrically symmetric chamber impressed to rotate about an axis of rotation through its generator, said chamber incorporating a cylindrical fluid-bearing cavity means within circular wall means of said chamber, said cavity extending over a range of radial distances from said axis of rotation, and said walls incorporating region transparent to light over a range of radial distances;

b) sample introduction means whereby said sample may be introduced into said cylindrical fluid-bearing cavity between said circular wall means, so that said sample undergoes separation by resultant centrifugal forces as said cylindrical chamber undergoes impressed rotation about said axis of rotation;

c) a transparent cylindrically symmetric optical berm means integrated into transparent region of one of said wall means;

d) a stationary external light source means providing a fine beam of light passing successively through transparent region of non-optical berm containing circular wall, said sample undergoing separation, and apex of said optical berm means;

e) a stationary forward transmitted light beam trapping means into which said fine beam of light enters after leaving said apex of said transparent berm;

f) a plurality of stationary detector means arranged about said light beam at varying angles therefrom, each said detector means masked by collimating means to accept only light scattered by said sample means from region of said sample illuminated by said incident light beam and passing through said transparent berm means; and

g) electronic means to convert signals from said scattered light detectors successively in time, converting said signals into digital representations, and transmitting said resultant digital signals to computer means for subsequent processing and analysis.

2. An improved disk centrifuge capable of measuring scattered light at a plurality of angles from a sample undergoing separation therein comprising

a) a cylindrical structure impressed to rotate about an axis of rotation through its generator, said cylindrical structure containing cavity means to incorporate transparent cuvettes, said cuvettes

i. containing samples, each said sample undergoing separation by resultant centrifugal forces as said cylindrical structure undergoes impressed rotation about said axis of rotation;

ii. having a plane transparent optical surface through which an incident light beam may pass and an opposite optical surface to provide a structure with said sample between said two surfaces; and

iii. oriented radially so that said resultant centrifugal force separates particles in a radial direction.

b) a stationary external light source means providing said fine beam of light passing successively through transparent regions of said optical surfaces of said sample containing cuvette;

c) a stationary forward transmitted light beam trapping means into which said fine beam of light enters after leaving said apex of said transparent cuvette;

d) a plurality of stationary detector means arranged about said light beam at varying angles therefrom, each said detector means masked by collimating means to accept only light scattered by said sample means from region of said sample-containing cuvette illuminated by said incident light beam and passing through said optical surface means; and

e) electronic means to convert signals from said scattered light detectors successively in time, converting said signals into digital representations, and transmitting said resultant digital signals to computer means for subsequent processing and analysis.

3. An improved analytical ultracentrifuge capable of measuring scattered light at a plurality of angles from a sample undergoing separation therein comprising

a) a cylindrical structure impressed to rotate about an axis of rotation through its generator, said cylindrical structure containing cavity means to incorporate transparent cuvettes, said cuvettes

iv. containing samples, each said sample undergoing separation by resultant centrifugal forces as said cylindrical structure undergoes impressed rotation about said axis of rotation;

v. having a plane transparent optical surface through which an incident light beam may pass and an opposite optical surface to provide a structure with said sample between said two surfaces; and

vi. oriented radially so that said resultant centrifugal force separates particles in a radial direction.

b) a first light source means directed normal to said rotating cylindrical structure providing said fine beam of light passing successively through transparent regions of said optical surfaces of said sample containing cuvette;

c) a forward transmitted light beam trapping means into which said fine beam of light enters after leaving said apex of said transparent cuvette;

d) a plurality of light scattering detector means arranged about said light beam at varying angles therefrom, each said light scattering detector means masked by collimating means to accept only light scattered by said sample means from region of said sample-containing cuvette illuminated by said incident light beam and passing through said optical surface means;

e) a second light source at the same radial distance from said axis of rotation as said first light source providing a second beam of light directed normal to said rotating cylindrical structure and passing through said cuvette when said cuvette has moved to a second angular position;

f) a second forward transmitted light beam trapping means into which said second fine beam of light enters after leaving said apex of said transparent cuvette

g) a second plurality of light scattering detector means arranged about said second light beam at varying angles therefrom, each said light scattering detector means masked by collimating means to accept only light scattered by said sample means from region of said sample-containing cuvette illuminated by said incident light beam and passing through said optical surface means;

h) a mechanical support means by which said two light beam sources, said two pluralities of light scattering detector means are fixed in space relative to said rotating cylindrical structure rotating therebetween, said mechanical structure permitting its movement in radial position only;

i) electronic means to convert signals from said two pluralities of scattered light detectors successively in time, converting said signals into digital representations, and transmitting said resultant digital signals to computer means for subsequent processing and analysis.

4. The improved analytical ultracentrifuge of embodiment 3 where each said forward transmitted light beam trapping means includes detection means to monitor intensity of said incident transmitted beam

5. The improved analytical ultracentrifuge of embodiment 3 where said first light source produces a light beam at a wavelength permitting measurement of said sample absorption by said detector monitoring means of said light beam transmitted through said sample means of Claim 4.

6. The improved analytical ultracentrifuge of embodiment 3 where said second light source is a laser.

7. The improved analytical ultracentrifuge of embodiment 6 where said laser source is plane polarized in a plane parallel to the radius of said rotating structure holding said sample cuvettes.

8. The improved analytical ultracentrifuge of embodiment 3 wherein said cuvette optical surface through which said fine light beam passes after its passage through said sample is of circular cross section extending along that region of said cuvette to include a selected range of radial positions along said rotating structure that said fine light beam may travel and having radius of curvature centered on said sample region illuminated by said fine light beam.

9. The cuvette of embodiment 8 wherein said circular cross section surface centered on said illuminated sample region has a flat apex so that transmitted fine light beam passes normal thereto and into stationary forward transmitted light beam trapping means.

10. The cuvette of embodiment 8 wherein all optical surfaces through which the incident beam and scattered light pass are coated with transparent optical materials to reduce scattering and reflections at all air interfaces.

11. The improved analytical ultracentrifuge of embodiment 3 where said plurality of light scattering detector means arranged about said light beam at varying angles therefrom lie in a plane perpendicular to said beam.

12. The improved disk centrifuge of embodiment 2 where said forward transmitted light beam trapping means includes detection means to monitor intensity of said incident transmitted beam.

13. The improved disk centrifuge of embodiment 3 wherein said cuvette optical surface through which said fine light beam passes after its passage through said sample is of circular cross section extending along the length of said cuvette to include a selected range of radial positions and having radius of curvature centered on said sample region illuminated by said fine light beam.

14. The cuvette of embodiment 13 wherein said circular cross section surface centered on said illuminated sample region has a flat apex so that transmitted fine light beam passes normal thereto and into stationary forward transmitted light beam trapping means.

15. The cuvette of embodiment 13 wherein all optical surfaces through which the incident beam and scattered light pass are coated with transparent optical materials to reduce scattering and reflections at all air interfaces.

16. The improved disk centrifuge of embodiment 2 where said plurality of light scattering detector means arranged about said light beam at varying angles therefrom lie in a plane perpendicular to said beam.

17. The improved disk centrifuge of embodiment 1 where said forward transmitted light beam trapping means includes detection means to monitor intensity of said incident transmitted beam.

18. The improved disk centrifuge of embodiment 1 wherein said transparent cylindrically symmetric optical berm means has radius of curvature centered on said sample region illuminated by said fine light beam.

19. The transparent cylindrically symmetric optical berm means of embodiment 18 wherein said circular cross section surface centered on said illuminated sample region has a flat apex so that transmitted fine light beam passes normal thereto and into stationary forward transmitted light beam trapping means.

20. The improved disk centrifuge of embodiment 1 wherein all optical surfaces through which the incident beam and scattered light pass are coated with transparent optical materials to reduce scattering and reflections at all air interfaces.

21. The improved disk centrifuge of embodiment where said plurality of light scattering detector means arranged about said light beam at varying angles therefrom lie in a plane perpendicular to said beam.

## Claims

1. A method to characterize a solution of small particles comprising the steps of

   a) placing a sample of said solution into a transparent sample holding means arranged in a centrifugal rotator means, said sample holding means comprising transparent walls so as to provide visible access to said sample and extending over a range of radial distances with respect to said centrifuge axis of rotation through which said particles in said sample may move during said separation;
   b) activating said centrifugal rotator to rotate about its axis of rotation producing, thereby, a centrifugal force acting on said particles in said sample;
   c) illuminating a region of said sample through said transparent containment means by a fine beam of light, wherein said light beam intersects said solution at predetermined radial distance from said axis of rotation and enters through one transparent containment wall and exits through another, with said sample contained therebetween, as said solution passes through said fine light beam;
   d) detecting light scattered by said sample from said incident fine beam of light, at selected time intervals, at a plurality of angular directions thereto by a corresponding plurality of detector means each of which is collimated and so-arranged to collect light only scattered into a specific direction subtending a finite defining solid angle, and each detector producing from said detected scattered light an electrical signal,
   e) converting said electrical signals into digital representations thereof and storing in memory means for subsequent processing; and
   f) processing said digital representations of said scattered light signals and said transmitted beam signal to derive therefrom characteristics of said small particles in said sample.

2. The method of Claim 1 where a second light source produces a second fine light beam that illuminates said sample subsequent to said first fine beam at the same radial distance therefrom but at a different angular location on said rotor as said rotor moves said transparent containment means through said second light beam; said second fine light beam entering a detector after passage through and exiting from said sample.

3. The method of Claim 2 where said second light source produces a fine beam of light permitting thereby said detector of said beam emerging after passage through said sample to produce a signal representative of the concentration of said particles through which said second fine beam passes.

4. The method of Claim 1 where said light source and plurality of detectors may move in unison radially so as the permit said light beam to sample different radial regions of said contained sample and said plurality of detector means to detect light scattered from said corresponding different radial regions.

5. The method of Claim 1 where said centrifugal rotator means is a component of a disk centrifuge.

6. The method of Claim 1 where said centrifugal rotator means is a component of an analytical ultracentrifuge.

7. The method of Claim 3 where said second light source produces said fine beam at an ultraviolet wavelength.

8. An apparatus to characterize a solution of small particles comprising

a) a sample holding means arranged in a centrifugal rotator means, said sample holding means extending over a range of radial distances with respect to said axis of rotation and comprising transparent walls containing a sample of said solution therebetween;
b) a light source means providing a fine beam of light that passes through said transparent walls when said holding means lies in the path of said fine beam of light while said solution sample undergoes separation due to the centrifugal forces impressed thereon by rotation in a circular path about said axis;
c) a forward transmitted light beam trapping means into which said fine beam of light enters after traversing said transparent sample-containing region;
d) a plurality of detector means, arranged about said transmitted light beam at varying angles therefrom, with each detector means so-arranged to collect light scattered from the same region of said sample illuminated by said incident fine beam of light passing through said transparent sample holding means, at a specific angular direction and into a corresponding solid angle subtended thereby; and
e) electronic means to convert signals from said scattered light detectors successively in time, converting said signals into digital representations, and transmitting said resultant digital signals to computer means for subsequent processing and analysis.

9. The apparatus of Claim 8 that includes a second light source producing a second fine beam of light illuminating said sample subsequent to said first fine beam at the same radial distance therefrom but at a different angular location on said rotor as said rotor moves said sample holding means into said second light beam.

10. The apparatus of Claim 9 where said second light source produces a fine beam of an ultraviolet wavelength permitting thereby the component of said beam emerging after passage through said sample to represent a measure of the concentration of said particles through which said second fine beam passes.

11. The apparatus of Claim 8 where said light source and plurality of detectors may move in unison radially so as the permit said light beam to sample different radial regions of said contained sample and said plurality of detector means to detect light scattered from said sample at said corresponding different radial regions.

12. The apparatus of Claim 9 where said centrifugal rotator means is a component of a disk centrifuge.

13. The apparatus of Claim 9 where said centrifugal rotator means is a component of an analytical ultracentrifuge.

FIGURE 1

FIGURE 2

**FIGURE 3a**

**FIGURE 3b**

# FIGURE 4

# FIGURE 5

FIGURE 6b

FIGURE 6a

FIGURE 7

# FIGURE 8

# FIGURE 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6411383 B1, P. J. Wyatt
- US 4311039 A, Koehler
- US 5786898 A, Fitzpatrick
- US 4871248 A

**Non-patent literature cited in the description**

- Submicrometer particle sizing by multiangle light scattering following fractionation. *J. Colloid and Interface Science,* vol. 197, 9-20
- **GIDDINGS.** *Science,* 1993, vol. 260, 1456
- *Journal of Colloid and Interface Science,* vol. 34, 159-162
- Cell Wall Thickness, Size Distribution, Refractive Index Ratio, and Dry Weight Content of Living Bacteria (Staphylococcus aureus. *Nature,* 1970, vol. 226, 277
- **SPORES V.** Dielectric Structure of Spores from Differential Light Scattering. *American Society for Microbiology,* 1971
- **D.T. PHILLIPS.** Structure of Single Bacteria from Light Scattering. *J. Theor. Biol.,* 1972, vol. 37, 493
- Some Chemical, Physical and Optical Properties of Fly Ash Particles. *Applied Optics,* 1980, vol. 14, 975